# EUROPÄISCHE PATENTANMELDUNG

(11) **EP 4 368 974 A1**
(43) Veröffentlichungstag der Anmeldung: **15.05.2024**
(21) Anmeldenummer: 23200417.6
(22) Anmeldetag: 28.09.2023
(51) Int. Cl.: G01N 21/90, G01N 21/84

(54) **UV-INSPEKTION ZUR IDENTIFIZIERUNG MANGELHAFTER BESCHICHTUNG AM GETRÄNKEDOSENBODEN**

(30) Priorität: 08.11.2022 DE 102022129394
(71) Anmelder: Krones AG, 93073 Neutraubling (DE)
(72) Erfinder: Knieling, Erwin, 93073 Neutraubling (DE); Dostalek, Michael, 93073 Neutraubling (DE)
(74) Vertreter: Bittner, Bernhard

(57) **Zusammenfassung**

Vorrichtung zum Inspizieren von Behältnissen (10) mit einer Transporteinrichtung, welche die Behältnisse (10) entlang eines vorgegeben Transportpfades transportiert, mit einer Inspektionseinrichtung (1, 3), welche einen Bodenbereich (12) der Behältnisse (10) inspiziert, dadurch gekennzeichnet, dass eine Beschichtung (20, 22) des Bodenbereichs (12) der Behältnisse (10) durch die Inspektionseinrichtung (1, 3) inspizierbar ist.

## Beschreibung

Die vorliegende Erfindung bezieht sich auf eine Vorrichtung und ein Verfahren zum Inspizieren eines Bodenbereichs von Behältnissen, insbesondere von Dosen.

Aus dem Stand der Technik ist seit langem bekannt, dass in Abfülllinien die zu befüllenden Behältnisse überwiegend aufrechtstehend transportiert werden. Im Fall von Dosen werden diese überwiegend auf dem Dosenboden stehend transportiert. Dabei spielen vor allem im Nassbereich die Gleiteigenschaften der Dosen eine große Rolle.

Die Gleiteigenschaften von Dosen können i.d.R. durch das Gewicht, die Art des Rumpflackes (glänzend, matt, etc.) oder durch den Bodenlack charakterisiert werden. Der transparente Bodenlack ist auf der ringförmigen Standfläche der Dose aufgetragen und dient dem Zweck die Gleiteigenschaften zu verbessern. Fehlender, mangelhaft aufgetragener oder teils abgeplatzter Bodenlack führt zu einem unruhigen Dosenlauf und kann ungewollte Beschädigungen, Kratzer oder grundlegend fehlerhaftes Dosenhandling herbeiführen.

In aktuellen Abfülllinien ist es nicht möglich die Qualität des Bodenlacks zu prüfen. Einerseits können hierdurch auftretende Fehler nicht eindeutig auf den Bodenlack zurückgeführt werden und andererseits ist es nicht möglich, präventiv einzugreifen. Dementsprechend werden chargenweise Einstellungen an kritischen Maschinenteilen beispielsweise an der Bandmitteldosierung verändert - teils ohne Erfolg.

Aus der EP 0 362 679 A2 sind eine Vorrichtung und ein Verfahren zur Inspektion von Dosen bekannt.

Daher stellt sich die vorliegende Erfindung die Aufgabe eine Vorrichtung und ein Verfahren bereitzustellen, welche eine Überprüfung des Bodenlacks insbesondere im Leerdosenbereich vor einer Abfülllinie ermöglicht. Erreicht wird diese Aufgabe erfindungsgemäß durch eine Vorrichtung und ein Verfahren nach den unabhängigen Patentansprüchen. Vorteilhafte Ausführungsformen und Weiterbildungen sind Gegenstand der Unteransprüche.

Eine erfindungsgemäße Vorrichtung zum Inspizieren von Behältnissen weist eine Transporteinrichtung auf, welche die Behältnisse entlang eines vorgegeben Transportpfades transportiert. Dabei wäre es sowohl möglich, dass die Behältnisse einbahnig transportiert werden sowie alternativ auf einem mehrbahnigen Massentransporteur. Weiterhin weist die Vorrichtung eine Inspektionseinrichtung auf, welche einen Bodenbereich der Behältnisse inspiziert. Erfindungsgemäß ist eine Beschichtung des Bodenbereichs der Behältnisse durch die Inspektionseinrichtung inspizierbar.

Dabei ist es möglich, dass die Inspektionseinrichtung in einem Bereich der Transporteinrichtung angeordnet ist und/oder die Behältnisse während ihres Transports mit der Transporteinrichtung transportiert werden. Es wäre jedoch auch möglich, dass die Inspektionseinrichtung die Behältnisse inspiziert bevor oder nachdem sie mit der Transporteinrichtung transportiert werden bzw. wurden.

Dabei wäre es sowohl möglich, dass die Inspektionseinrichtung die Behältnisse in ihrer Bewegung inspiziert als auch in einem Stillstand, etwa, während sich die Behältnisse in einem Reservoir befinden.

Bevorzugt handelt es sich bei dem Behältnis um eine Dose und besonders bevorzugt um eine leere Dose. Bevorzugt handelt es sich um eine offene Dose. Bevorzugt weist der Boden der Dose eine Beschichtung zur Verbesserung der Gleiteigenschaften auf. Bevorzugt ist die Beschichtung nur auf der ringförmigen Standfläche der Dosen aufgebracht. Bei einer vorteilhaften Ausführungsform ist die Beschichtung ein Lack und insbesondere ein wenigstens teilweise transparenter Lack und insbesondere ein vollständig transparenter Lack, welcher UV-aktive Partikel aufweist. Dabei ist der Lack insbesondere für Licht im sichtbaren Wellenlängenbereich transparent oder wenigstens teiltransparent.

Bevorzugt weisen die UV-aktiven Partikel einen fluoreszenten Farbstoff auf. Bevorzugt ist der fluoreszente Farbstoff durch UV-Strahlung zur Emission von Licht im sichtbaren Bereich anregbar. Bevorzugt ist der fluoreszente Farbstoff durch UV-Strahlung mit einer Wellenlänge kleiner als 400 nm, bevorzugt kleiner als 350 nm und besonders bevorzugt kleiner als 300 nm anregbar.

Bevorzugt weisen die UV-aktiven Partikel einen Anteil an fluoreszenten Farbstoff auf.

Bevorzugt weist die Vorrichtung eine Transporteinrichtung auf, welche die Behältnisse und insbesondere die Dosen entlang eines vorgegebenen Transportpfades transportiert. Bevorzugt werden die Behältnisse derart transportiert, dass der Bodenbereich der Behältnisse zumindest in einem Abschnitt der Transporteinrichtung nicht durch die Transporteinrichtung bzw. Teile der Transporteinrichtung kontaktiert bzw. verdeckt wird. Bevorzugt werden die Behältnisse seitlich eingeklemmt transportiert, bevorzugt durch zwei (insbesondere umlaufende) Transportbänder.

Es wäre jedoch auch ein Transport mittels einer Ansaugung bzw. mittels eines Unterdrucks möglich. So könnten die Behältnisse beispielsweise durch Anlagen eines Unterdrucks an einem vorgegebenen Bereich des Behältnisses, beispielsweise einem Dosenflansch gehalten werden.

Bevorzugt weist die Vorrichtung eine Inspektionseinrichtung auf, welche dazu geeignet und bestimmt ist einen Bodenbereich der Behältnisse zu inspizieren und besonders bevorzugt eine Beschichtung des Bodenbereichs der Behältnisse zu inspizieren. Bevorzugt ist die Inspektionseinrichtung unterhalb des Transportpfades der Behältnisse angeordnet. Es wäre jedoch auch denkbar, dass die Behältnisse zum Zweck der Inspektion umgedreht werden. Auch wäre es denkbar, dass die Inspektion durch eine transparente Auflagefläche, auf der die Behältnisse transportiert werden, inspiziert werden.

Bei einer vorteilhaften Ausführungsform weist die Inspektionseinrichtung eine Erfassungseinrichtung zur Erfassung ortsaufgelöster Aufnahmen auf und bevorzugt Aufnahmen des Bodenbereichs der Behältnisse. Bevorzugt weist die Erfassungseinrichtung eine Bildaufnahmeeinrichtung und insbesondere eine Kamera auf welche insbesondere zur Aufnahme ortsaufgelöster Bilder geeignet und bestimmt ist.

Bevorzugt weist die Inspektionseinrichtung eine Beleuchtungseinrichtung zur Beleuchtung der zu inspizierenden Behältnisse auf. Dabei kann es sich bei der Beleuchtungseinrichtung um eine getaktete Beleuchtungseinrichtung handeln, welche besonders bevorzugt auf die Bildaufnahme der Behältnisse getriggert bzw. synchronisiert ist.

Bei einer vorteilhaften Ausführungsform weist die Inspektionseinrichtung wenigstens eine UV-Lichtquelle auf, durch welche die UV-aktiven Partikel zur Emission von Fluoreszenzstrahlung anregbar sind. Bevorzugt handelt es sich bei der UV-Lichtquelle um eine UV-LED und besonders bevorzugt um ein Aggregat von UV-LEDs. Bevorzugt handelt es sich bei den UV-LEDs um solche, welche UV-Strahlung mit einer Wellenlänge von 350 nm (oder in einem Wellenlängenbereich um 350nmn) emittieren und/oder besonders bevorzugt um solche, welche UV-Strahlung mit einer Wellenlänge von 265 nm (oder in einem Wellenlängenbereich um 265nm) emittieren.

Bei einer weiteren bevorzugten Ausführungsform ist eine Filtereinrichtung zwischen der Lichtquelle und dem Behältnis vorgesehen. So kann etwa die Lichtquelle als UV-A Lichtquelle ausgebildet sein und bevorzugt eine Filtereinrichtung aufweisen. Dabei kann es sich bevorzugt um eine auf eine bestimmte Wellenlänge zentrierte Filtereinrichtung handeln, etwa eine auf 365nm zentrierte Filtereinrichtung.

Bei einer bevorzugten Ausführungsform ist die Beleuchtungseinrichtung bzw. die UV-Lichtquelle unter einem Winkel kleiner als 60° und bevorzugt kleiner als 50° und besonders bevorzugt kleiner als 40° gegenüber dem Transportpfad der Behältnisse angeordnet. Bei einer bevorzugten Ausführungsform ist die Erfassungseinrichtung unter einem Winkel kleiner als 60° und bevorzugt kleiner als 50° und besonders bevorzugt kleiner als 40° gegenüber dem Transportpfad der Behältnisse angeordnet. Bei einer bevorzugten Ausführungsform sind die Beleuchtungseinrichtung bzw. die UV-Lichtquelle und die Erfassungseinrichtung unter einem Winkel von kleiner als 120°, bevorzugt kleiner als 90° und besonders bevorzugt kleiner als 60° in Bezug auf das zu inspizierende Behältnis angeordnet.

Bei einer weiteren bevorzugten Ausführungsform ist die Lichtquelle in vertikaler Richtung oberhalb des Behältnisses angeordnet (insbesondere im Zeitpunkt der Bildaufnahme).

Bei einer bevorzugten Ausführungsform weist die Beleuchtungseinrichtung eine Leistung auf, welche zwischen 20W und 100W, bevorzugt zwischen 20W und 80W und bevorzugt zwischen 30W und 50W liegt. Bevorzugt liegt eine emittierte Lichtleistung zwischen 2W und 1 0W.

Bei einer weiteren bevorzugten Ausführungsform weist die Lichtquelle eine ringförmige Abstrahlfläche auf. So können beispielsweise mehrere LEDs ringförmig angeordnet sein.

Bei einer vorteilhaften Ausführungsform weist die Inspektionseinrichtung eine Erfassungseinrichtung zur Erfassung von Daten auf, wobei es sich bei den Daten um ortsaufgelöste Aufnahmen des Bodenbereichs der Behältnisse und/oder um Intensitäten der emittierten Fluoreszenzstrahlung handelt.

Bevorzugt ist die Erfassungseinrichtung dazu geeignet und bestimmt sowohl ortsaufgelöste Aufnahmen des Bodenbereichs der Behältnisse zu erfassen als auch die Intensitäten der emittierten Fluoreszenzstrahlung insbesondere ortsaufgelöst zu erfassen. Es wäre auch denkbar, dass nur ortsaufgelöste Aufnahmen erfasst werden.

Hierdurch ist es möglich, den Bodenlack mittels einer UV-Beleuchtung zu visualisieren und bevorzugt über geeignete Kamera- und Softwaretechnik zu charakterisieren. Dünner, stellenweise oder gänzlich fehlender sowie abgeplatzter Bodenlack kann erfasst und (das entsprechende Behältnis) präventiv ausgeschleust werden, sodass die Linieneffizienz unabhängig von der Chargenqualität der Behälterlieferanten hoch bleibt und Maschineneinstellungen konstant bleiben.

Bevorzugt weist die Erfassungseinrichtung wenigstens eine Photodiode und bevorzugt einen Photodiodenarray und besonders bevorzugt einen Photomultiplier zur Erfassung der emittierten Fluorenzenzstrahlung auf. Bevorzugt weist die Inspektionseinrichtung genauer gesagt die Erfassungseinrichtung einen Monochromator auf, welcher für eine Wellenlänge der emittierten Fluoreszenzstrahlung charakteristisch ist und/oder welcher eine Auflösung einer auf diesen auftreffenden Strahlung hinsichtlich deren Wellenlängen ermöglicht. Bevorzugt ist der Monochromator an eine Wellenlänge der emittierten Fluoreszenzstrahlung anpassbar. Dies bietet den Vorteil, dass bei einem Wechsel der verwendeten Beschichtung bzw. bei einem Wechsel des fluoreszenten Farbstoffs die Erfassungseinrichtung an den fluoreszenten Farbstoff anpassbar ist.

Bei einer vorteilhaften Ausführungsform weist die Inspektionseinrichtung eine Auswertungseinrichtung auf, welche dazu geeignet und bestimmt ist, die von der Erfassungseinrichtung erfassten Daten auszuwerten. Bei den erfassten Daten handelt es sich bevorzugt um die erfassten ortsaufgelösten Aufnahmen und/oder die erfassten Intensitäten der emittierten Fluoreszenzstrahlung. Bei einer vorteilhaften Ausführungsform weist die Inspektionseinrichtung eine Speichereinrichtung auf, in welcher Referenzdaten und/oder Kalibrierdaten und/oder Vergleichsbilder abgelegt sind. Bevorzugt werden die erfassten ortsaufgelösten Aufnahmen und/oder erfassten Intensitäten der emittierten Fluoreszenzstrahlung in der Speichereinrichtung abgelegt.

Bei einer bevorzugten Ausführungsform erfolgt eine Auswertung der erfassten Daten mit Hilfe einer trainierten Kl. Bevorzugt werden die Kalibrierdaten und/oder Referenzdaten zum Trainieren der KI verwendet. Bevorzugt ist die KI dazu eingerichtet, anhand der erfassten Daten zu beurteilen, ob das inspizierte Behältnis bzw. die inspizierte Beschichtung den Vorgaben entspricht. Bevorzugt ist die KI dazu eingerichtet, die erfassten Daten bestimmten Klassen zuzuordnen, beispielsweise ob es sich bei einem erkannten Mangel um einen abgeplatzten Lack handelt, um einen bereichsweise zu geringen und/oder großen Auftrag an Lack handelt, um einen globalen zu geringen Lackauftrag und dergleichen handelt.

Bei der Speichereinrichtung kann es sich bevorzugt entweder um einen lokalen Speicher oder um einen externen Speicher handeln. Bevorzugt handelt es sich bei der externen Speichereinrichtung um eine Cloud-basierte Speichereinrichtung und/oder um einen externen Server, wobei auf die Speichereinrichtung insbesondere über das Internet zugegriffen wird.

Bevorzugt sind auf der Speichereinrichtung Kalibrierdaten abgelegt, welche einen Zusammenhang zwischen einer erfassten Intensität der emittierten Fluoreszenzstrahlung und der Gesamtmenge an fluoreszentem Farbstoff beinhalten. Bevorzugt sind die Kalibrierdaten charakteristisch für einen verwendeten fluoreszenten Farbstoff und besonders bevorzugt sind die Kalibrierdaten charakteristisch für einen Anteil des fluoreszenten Farbstoffs an dem zur Beschichtung verwendeten Lack.

Bei einer vorteilhaften Ausführungsform ist die Inspektionseinrichtung kalibrierbar und bevorzugt werden die erfassten Kalibrierdaten in der Speichereinrichtung abgelegt. Bevorzugt wird zur Kalibrierung ein Set an beschichteten Behältnissen und bevorzugt mehrere Sets von beschichteten Behältnissen verwendet, wobei sich die Behältnisse innerhalb eines Sets nur durch einen Parameter voneinander unterscheiden. Bevorzugt handelt es sich bei diesem Parameter um eine Schichtdicke, eine Gesamtmenge an verwendetem Lack, einen Anteil des fluoreszenten Farbstoffs an dem verwendeten Lack, die Art des verwendeten Fluoreszenzfarbstoffs und dergleichen.

Bevorzugt ist die Auswertungseinrichtung dazu geeignet und bestimmt durch ein Vergleichen der ortsaufgelösten Aufnahmen der zu inspizierenden Behältnisse mit auf der Speichereinrichtung abgelegten Referenzbildern zu bestimmen, ob das inspizierte Behältnis den (vorgegebenen) Anforderungen entspricht. Bevorzugt sind der Auswertungseinrichtung Toleranzgrenzen vorgebbar, innerhalb welcher ein inspiziertes Behältnis noch den Anforderungen entspricht.

Bevorzugt ist die Auswertungseinrichtung dazu geeignet und bestimmt durch Auswerten der erfassten Intensitäten der emittierten Fluorenzstrahlung einen Rückschluss auf die Gesamtmenge an fluoreszentem Farbstoff zu ermöglichen. Bevorzugt kann bei einem bekannten Anteil des Fluoreszenzfarbstoffs an der Beschichtung auf eine Gesamtmenge der Beschichtung zurückgeschlossen werden. Bei einer bevorzugten Ausführungsform ist es möglich durch eine Kombination mit den ortsaufgelösten Aufnahmen eine (mittlere) Schichtdicke der Beschichtung zu bestimmen.

Bevorzugt ist die Auswertungseinrichtung dazu geeignet und bestimmt, durch ein Vergleichen der ortsaufgelösten Bilder mit den in der Speichereinrichtung abgelegten Referenzbildern zu ermitteln, ob die Beschichtung fehlerhafte Bereiche aufweist, beispielsweise abgeplatzte Lackstellen oder ein ungleichmäßiger Auftrag des Lacks. Bevorzugt ist die Auswertungseinrichtung dazu geeignet und bestimmt, zu ermitteln, ob der Lack nur auf der vorgesehenen Fläche (ringförmiger Standbereich) aufgebracht wurde oder ob angrenzende Bereiche ebenfalls beschichtet wurden. Bevorzugt ist die Auswertungseinrichtung dazu geeignet und bestimmt, durch Auswerten der Intensitätsdaten zu ermitteln, ob zu viel oder zu wenig Lack aufgebracht wurde bzw. ob bereichsweise zu viel oder zu wenig Lack aufgebracht wurde.

Bei einer vorteilhaften Ausführungsform weist die Vorrichtung eine Auswurfeinrichtung auf, welche dazu geeignet und bestimmt ist, in Abhängigkeit von einem Ergebnis der Auswerteeinrichtung das inspizierte Behältnis auszuwerfen.

Dies bietet den Vorteil, dass fehlerhafte Behältnisse, insbesondere Dosen präventiv ausgeschleust werden können, wodurch die Effizienz einer nachgeschalten Abfülleinrichtung gesteigert werden kann und die Anzahl an Bedienereingriffen reduziert werden kann.

Bei einer vorteilhaften Ausführungsform weist die Inspektionseinrichtung eine Abdeckung auf, welche dazu geeignet und bestimmt ist, die Umgebung und insbesondere einen Bediener der Anlage vor der (schädlichen) UV-Strahlung zu schützten und bevorzugt die Inspektionseinrichtung von äußeren Einflüssen, insbesondere vor Licht zu schützen. Bevorzugt weist die Inspektionseinrichtung einen Sicherheitsmechanismus auf, wodurch eine Emission von UV-Strahlung nur in einem geschlossenen Zustand der Abdeckung ausführbar ist. Beispielsweise kann es sich hierbei um einem Magnetschalter handeln.

Die vorliegende Erfindung ist auch auf ein Verfahren zum Inspizieren von Behältnissen gerichtet, wobei eine Transporteinrichtung vorgesehen ist, welche die Behältnisse entlang eines vorgegebenen Transportpfads transportiert. Weiterhin ist eine Inspektionseinrichtung vorgesehen, welche einen Bodenbereich der Behältnisse inspiziert, wobei die Inspektionseinrichtung eine Erfassungseinrichtung zur Erfassung von Daten und eine Auswerteinrichtung zum Auswerten der erfassten Daten aufweist. Erfindungsgemäß inspiziert die Inspektionseinrichtung eine Beschichtung des Bodenbereichs der Behältnisse.

Bevorzugt werden die Behältnisse, insbesondere Dosen durch die Transporteinrichtung aufrechtstehend transportiert, wobei die Behältnisse bevorzugt seitlich eingeklemmt transportiert werden, sodass der Bodenbereich der Behältnisse zumindest in einem Abschnitt der Transporteinrichtung nicht durch die Transporteinrichtung bzw. Teile der Transporteinrichtung kontaktiert wird. Wie oben erwähnt, ist jedoch auch ein Transport oder ein Halten der Behältnisse mittels Vakuum möglich. Bevorzugt findet eine Behältnisausleitung beim Transport mittels Vakuumtransporteur durch seitliches Beaufschlagen mittels (Press-) Luft und/ oder abschalten des Vakuums beim auszuleitenden Behältnis statt.

Bevorzugt ist die Inspektionseinrichtung derart angeordnet, dass die Behältnisse und bevorzugt der Bodenbereich der Behältnisse von unten inspiziert werden. Bevorzugt wird eine Beschichtung der Bodenfläche der Behältnisse, welche nur an dem ringförmiger Standbereich der Behältnisse aufgebracht ist, inspiziert. Bei einem vorteilhaften Verfahren werden UV-aktive Partikel der Beschichtung durch eine UV-Lichtquelle der Inspektionseinrichtung zur Emission von Fluoreszenzstrahlung angeregt.

Bevorzugt erfasst die Erfassungseinrichtung der Inspektionseinrichtung Daten in Bezug auf die zu untersuchende Beschichtung. Bei einem vorteilhaften Verfahren handelt es sich bei den erfassten Daten um ortsaufgelöste Aufnahmen des Bodenbereichs der Behältnisse und/oder um Intensitäten der emittierten Fluoreszenzstrahlung. Bevorzugt werden Bilder aufgenommen. Bevorzugt werden ortsaufgelöste Aufnahmen durch eine Kamera aufgenommen. Bei einem bevorzugten Verfahren werden Daten in Bezug auf die Intensität der emittierten Fluoreszenzstrahlung erfasst, bevorzugt durch einen geeigneten Detektor, wie eine Photodiode, einen Photodiodenarray, einen Photomultiplier oder dergleichen.

Bei einem vorteilhaften Verfahren werden die erfassten Daten von der Auswertungseinrichtung ausgewertet. Bevorzugt werden die erfassten Daten, insbesondere die ortsaufgelösten Aufnahmen der Beschichtung des Bodenbereichs der Behältnisse im Rahmen der Auswertung mit Referenzdaten verglichen, welche auf einer Speichereinrichtung abgelegt sind. Durch diesen Vergleich wird ermittelt, ob das inspizierte Behältnis genauer gesagt die Beschichtung des Bodenbereichs den Anforderungen entspricht.

Erfüllt ein inspiziertes Behältnis nicht die Anforderungen, so kann es durch eine Auswurfeinrichtung ausgeschleust werden. Bevorzugt werden die erfassten Daten in der Speichereinrichtung abgelegt und stehen für eine spätere Auswertung zur Verfügung. So kann beispielsweise festgestellt werden, ob sich ein bestimmter Fehler wie beispielsweise eine abgeplatzte Beschichtung, ein stellenweiser Auftrag der Beschichtung oder eine zu dünne Beschichtung ein Problem einzelner Behältnisse ist oder ob sich um ein chargenweites Problem handelt.

Bei einem bevorzugten Verfahren umfassen die erfassten Daten neben den ortsaufgelösten Aufnahmen des Bodenbereichs auch Daten in Bezug auf die Intensitäten der emittierten Fluoreszenzstrahlung. Bevorzugt sind die Intensitätsdaten ebenfalls ortsaufgelöst und ermöglichen eine Auswertung einer Intensitätsverteilung. So können beispielsweise Bereiche mit einer geringeren Intensität der emittierten Fluoreszenzstrahlung ermittelt werden, was mit einer geringeren Menge an fluoreszentem Farbstoff korreliert. Dies entspricht beispielsweise einer geringeren Schichtdicke in diesem Bereich. Werden beispielsweise im ganzen Aufnahmebereich geringere Intensitäten der emittierten Fluoreszenzstrahlung erfasst, könnte dies ein Indiz für einen flächendeckenden zu geringen Auftrag der Beschichtung sein oder auch mit einem geringeren Anteil an fluoreszentem Farbstoff in der Beschichtung korrelieren, wobei allerdings eine ausreichende Schichtdicke des Lacks vorliegt. In einem solchen Fall kann beispielsweise ein Bediener der Anlage benachrichtigt werden.

Weitere Vorteile und Ausführungsformen ergeben sich aus den beigefügten Zeichnungen. Darin zeigen:
Fig. 1 ein Behältnis mit einer intakten Beschichtung des Bodenbereichs;
Fig. 2 ein Behältnis mit einem Bereich mit einer abgeplatzten Beschichtung des Bodenbereichs;
Fig. 3 ein Behältnis mit einem mangelhaften/stellenweisen Auftrag der Beschichtung;
Fig. 4 ein Behältnis mit einem dünnen Auftrag der Beschichtung bzw. einen Auftrag mit einem Lack mit einem geringeren Anteil an UV-aktiven Partikeln; und
Fig. 5 eine schematische Darstellung einer erfindungsgemäßen Vorrichtung.

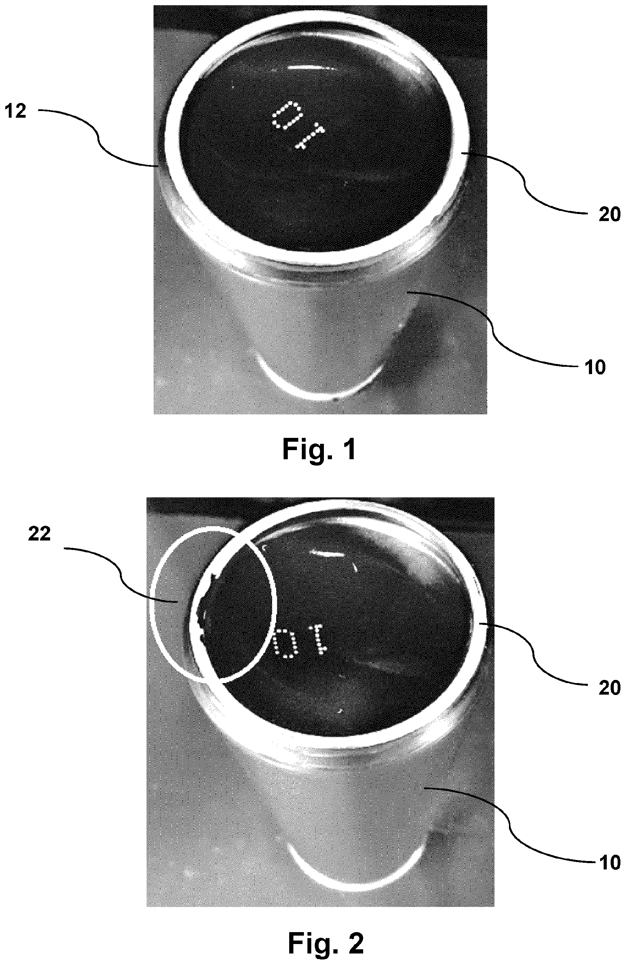

Die in den Figuren 1 bis 4 gezeigten inspizierten Behältnisse wurde alle mit UV-Licht identischer Leistung beleuchtet.

Figur 1 zeigt ein Behältnis 10, genauer gesagt eine Dose, welche im Bodenbereich 12 eine intakte Beschichtung 20 mit einem gleichmäßigen Lackauftrag aufweist. Im Falle dieser Dose wäre es möglich, dass entschieden wird, ob diese Dose den vorgegebenen Parametern noch genügt, oder ob diese Dose aus einer Produktion auszuschleusen ist.

Figur 2 zeigt ein Behältnis, welches in dem markierten Bereich 22 einen abgeplatzten Bereich der Beschichtung aufweist. Ein solches Behältnis 10 kann von der Auswertungseinrichtung (nicht dargestellt) als fehlerhaft identifiziert werden und dessen Ausschleusung veranlasst werden.

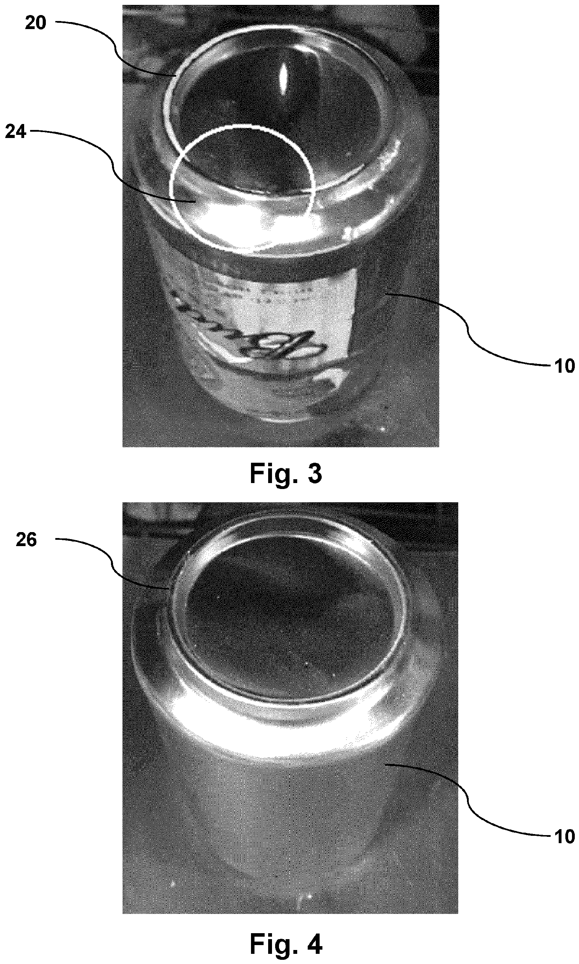

Figur 3 zeigt ein beispielhaftes Behältnis 10, bei welchem der Lackauftrag nur stellenweise bzw. stellenweise mangelhaft ausgeführt ist. Der Bodenbereich weist Bereiche mit einem intakten Lackauftrag (Bereich 20) auf und Bereiche mit einer ungenügenden Menge an aufgebrachtem Lack (Bereich 24). Ein solches Behältnis 10 kann von der Auswertungseinrichtung anhand der erfassten ortsaufgelösten Aufnahme als fehlerhaft identifiziert werden und dessen Ausschleusung veranlasst werden.

Figur 4 zeigt ein Behältnis 10, bei welchem eine insgesamt nur schwach fluoreszierende Beschichtung 26 vorliegt. Dies kann entweder auf eine zu geringe Schichtdicke zurückgeführt werden oder auf einen geringeren Anteil an fluoreszenten Partikeln im Lack hindeuten. In diesem Fall ist es denkbar, dass die Auswertungseinrichtung einen Bediener der Anlage informiert.

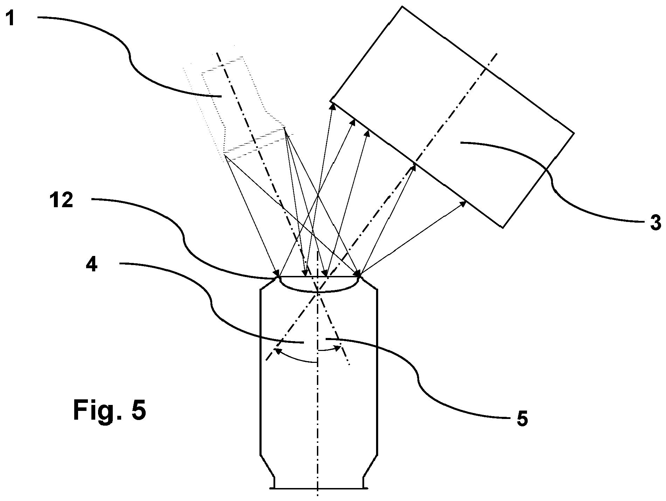

Figur 5 zeigt eine schematische Darstellung einer erfindungsgemäßen Vorrichtung. Dabei ist ein Behältnis dargestellt, welches von einer Beleuchtungseinrichtung 1 und insbesondere einer UV - Beleuchtungseinrichtung beleuchtet wird. Genauer wird dabei der Bodenbereich der Behältnisse inspiziert. Das Bezugszeichen 3 kennzeichnet eine Erfassungseinrichtung, welche bevorzugt jeweils wenigstens ein (ortsaufgelöstes) Bild der transportierten Behältnisse aufnimmt.

Die Behältnisse werden bevorzugt mittels einer (nicht gezeigten) Transporteinrichtung entlang eines vorgegebenen bevorzugt geradlinigen Transportpfads an der Inspektionseinrichtung 1,3 vorbei transportiert.

Das Bezugszeichen 5 kennzeichnet einen Winkel (gegenüber einer vertikalen Richtung), unter welchem die Beleuchtungseinrichtung Strahlung auf das Behältnis und insbesondere den Bodenbereich 12 des Bodens einstrahlt. Dieser Winkel liegt bevorzugt zwischen 0° und 50°, bevorzugt zwischen 0° und 30° und besonders bevorzugt zwischen 0° und 20°. Es wäre jedoch auch möglich, dass dieser Winkel bei 0° liegt.

Das Bezugszeichen 4 kennzeichnet einen Winkel (gegenüber einer vertikalen Richtung), unter welchem die Erfassungseinrichtung das Behältnis und insbesondere den Bodenbereich 12 des Bodens beobachtet. Dieser Winkel liegt bevorzugt zwischen 0° und 60°, bevorzugt zwischen 0° und 50° und besonders bevorzugt zwischen 0° und 40°, bevorzugt zwischen 0° und 30°. Es wäre jedoch auch möglich, dass dieser Winkel zwischen 0° und 10° liegt oder auch bei 0° liegt.

Anders als bei der in Fig. 5 gezeigten Ausführungsform wäre es jedoch auch möglich, dass die Erfassungseinrichtung 3 senkrecht über dem Behältnis angeordnet ist und/oder die Beleuchtungseinrichtung ringförmig um diese Erfassungseinrichtung herum angeordnet ist. So kann beispielsweise eine Vielzahl von Lichtquellen, beispielsweise UV LEDs konzentrischringförmig um die Erfassungseinrichtung angeordnet sein.

Bevorzugt ist dabei gewährleistet, dann von diesen LEDs ausgehende UV Strahlung nicht unmittelbar auf die Erfassungseinrichtung gelangt sondern zuerst auf das Behältnis bzw. dessen Boden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: UV - Lichtquelle
- 3: Erfassungseinrichtung
- 4: Winkel zwischen Einstrahlrichtung und vertikaler Richtung
- 5: Winkel zwischen Beobachtungsrichtung und vertikaler Richtung
- 10: Behältnis (Dose)
- 12: Bodenbereich des Behältnisses (Dose)
- 20: intakte Beschichtung
- 22: abgeplatzte Beschichtung
- 24: mangelhafter/stellenweiser Auftrag der Beschichtung
- 26: dünner Auftrag der Beschichtung

## Patentansprüche

1. Vorrichtung zum Inspizieren von Behältnissen (10) mit einer Transporteinrichtung, welche die Behältnisse (10) entlang eines vorgegeben Transportpfades transportiert, mit einer Inspektionseinrichtung (1, 3), welche einen Bodenbereich (12) der Behältnisse (10) inspiziert,
**dadurch gekennzeichnet, dass**
eine Beschichtung (20, 22) des Bodenbereichs (12) der Behältnisse (10) durch die Inspektionseinrichtung (1, 3) inspizierbar ist.

2. Vorrichtung nach Anspruch 1,
**dadurch gekennzeichnet, dass**
die Beschichtung (20, 22) ein Lack ist, welcher UV-aktive Partikel aufweist.

3. Vorrichtung nach wenigstens einem der vorhergehenden Ansprüche,
**dadurch gekennzeichnet, dass**
die Inspektionseinrichtung (1, 3) wenigstens eine UV-Lichtquelle (1) aufweist, durch welche die UV-aktiven Partikel der Beschichtung (20, 22) zur Emission von Fluoreszenzstrahlung anregbar sind.

4. Vorrichtung nach wenigstens einem der vorhergehenden Ansprüche,
**dadurch gekennzeichnet, dass**
die Inspektionseinrichtung (1,3) derart angeordnet ist, dass die Behältnisse (10) während ihres Transports mit der Transporteinrichtung und insbesondere während ihrer Transportbewegung inspizierbar sind.

5. Vorrichtung nach wenigstens einem der vorhergehenden Ansprüche,
**dadurch gekennzeichnet, dass**
die Inspektionseinrichtung (1, 3) eine Erfassungseinrichtung (3) zur Erfassung von Daten aufweist, wobei es sich bei den Daten um ortsaufgelöste Aufnahmen des Bodenbereichs (12) der Behältnisse (10) und/oder um Intensitäten der emittierten Fluoreszenzstrahlung handelt.

6. Vorrichtung nach wenigstens einem der vorhergehenden Ansprüche,
**dadurch gekennzeichnet, dass**
die Inspektionseinrichtung eine Auswertungseinrichtung aufweist, welche dazu geeignet und bestimmt ist, die von der Erfassungseinrichtung erfassten Daten auszuwerten.

7. Vorrichtung nach dem vorhergehenden Anspruch,
**dadurch gekennzeichnet, dass**
die Vorrichtung eine Auswurfeinrichtung aufweist, welche dazu geeignet und bestimmt ist, in Abhängigkeit von einem Ergebnis der Auswerteeinrichtung das inspizierte Behältnis auszuwerfen.

8. Verfahren zum Inspizieren von Behältnissen (10) mit einer Transporteinrichtung, welche die Behältnisse (10) entlang eines vorgegebenen Transportpfads transportiert und mit einer Inspektionseinrichtung (1, 3), welche einen Bodenbereich (12) der Behältnisse (10) inspiziert, wobei die Inspektionseinrichtung (1, 3) eine Erfassungseinrichtung (3) zur Erfassung von Daten und eine Auswerteinrichtung zum Auswerten der erfassten Daten aufweist,
**dadurch gekennzeichnet, dass**
die Inspektionseinrichtung (1,3) eine Beschichtung des Bodenbereichs (12) der Behältnisse (10) inspiziert.

9. Verfahren nach dem vorhergegangenen Anspruch,
**dadurch gekennzeichnet, dass**
UV-aktive Partikel der Beschichtung durch eine UV-Lichtquelle der Inspektionseinrichtung (1, 3) zur Emission von Fluoreszenzstrahlung angeregt werden.

10. Verfahren nach dem vorhergegangenen Anspruch,
**dadurch gekennzeichnet, dass**
es sich bei den erfassten Daten um ortsaufgelöste Aufnahmen des Bodenbereichs der Behältnisse (10) und/oder um Intensitäten der emittierten Fluoreszenzstrahlung handelt und/oder Bilder aufgenommen werden.

11. Verfahren nach dem vorhergegangenen Anspruch,
**dadurch gekennzeichnet, dass**
die erfassten Daten von der Auswertungseinrichtung ausgewertet werden.
